# EUROPEAN PATENT SPECIFICATION

(11) **EP 2 375 695 B1**
(45) Date of publication and mention of the grant of the patent: **31.12.2014**
(21) Application number: 11002892.5
(22) Date of filing: 06.04.2011
(51) Int. Cl.: H04L 29/08, H04L 12/24

(54) **System and method for managing a network of user-selectable devices**
System und Verfahren zur Verwaltung eines Netzes von durch Benutzer auswählbaren Vorrichtungen
Système et procédé de gestion d'un réseau de dispositifs sélectionnables par l'utilisateur

(30) Priority: 12.04.2010 US 323223 P; 07.03.2011 US 201113042133
(43) Date of publication of application: 12.10.2011
(73) Proprietor: Broadcom Corporation, Irvine, CA 92617 (US)
(72) Inventor: Karaoguz, Jeyhan, Irvine, CA 92606 (US)
(74) Representative: Jehle, Volker Armin

(56) References cited:
- EP-A2- 1 345 381
- WO-A1-2006/136985
- WO-A2-2009/149084

## Description

### BACKGROUND OF THE INVENTION

Present communication networks are incapable of providing for and/or conveniently providing for user-selection of communication network devices (*e.g*., for remote monitoring and/or control). Further limitations and disadvantages of conventional and traditional approaches will become apparent to one of skill in the art, through comparison of such systems with the present invention as set forth in the remainder of the present application with reference to the drawings.

WO 2009/149084 A2 discloses a system for processing user input received at a graphical user interface to configure a building device. The system includes a processor and a first memory unit communicably coupled to the processor. The memory includes computer code for processing data relating to a floor plan and computer code for generating a graphical user interface, the graphical user interface including a representation of the floor plan. The memory further includes computer code for positioning an indicator relative to the graphical representation of the floor plan based on the user input, the indicator representing the building device. The memory also includes computer code for configuring the building device based on the position of the indicator relative to the graphical representation of the floor plan.

### BRIEF SUMMARY OF THE INVENTION

Various aspects of the present invention provide a system and method for managing a network of user-selectable devices, substantially as shown in and/or described in connection with at least one of the figures, as set forth more completely in the claims.
According to an aspect, a method according to claim 1 is provided for managing a network of user-selectable devices. Advantageously, said device identification information comprises information indicating a general type of a user-selectable device.
Advantageously, said device identification information comprises information indicating a device model number of a user-selectable device.

Advantageously, said receiving device location information comprises:
presenting a map; and
receiving a user input identifying a location of the user-selectable device on the presented map.
Advantageously, said receiving device location information comprises:
presenting an image; and
receiving a user input identifying a user-selectable device in the presented image.
Advantageously, said presenting an image comprises presenting a real-time image from a camera.
Advantageously, said receiving device location information comprises receiving information from a user describing a multi-dimensional space associated with a user-selectable device.
Advantageously, the method further comprises receiving device identity information from a user-selectable device.
Advantageously, the method further comprises receiving communication information describing how to communicate with the user-selectable device.
Advantageously, the communication information comprises communication network address information for the user-selectable device.
Advantageously, the communication information comprises communication protocol information for the user-selectable device.
Advantageously, the method further comprises receiving information describing user-interface functionality for the user-selectable device.
Advantageously, said maintaining a database comprises maintaining a data structure in which information of a user-selectable device is retrievable by device location.
Advantageously, said maintaining a database comprises maintaining a data structure in which information of a user-selectable device is indexed by location on a map.
Advantageously, said maintaining a database comprises maintaining a data structure in which information of a user-selectable device is indexed by location in an image.
According to an aspect, a system according to claim 13 is provided for managing a network of user-selectable devices. Advantageously, said device identification information comprises information indicating a general type of a user-selectable device.
Advantageously, said device identification information comprises information indicating a device model number of a user-selectable device.
Advantageously, said at least one module is operable to said receive device location information by, at least in part, operating to:
present a map; and
receive a user input identifying a location of the user-selectable device on the presented map.
Advantageously, said at least one module is operable to said receive device location information by, at least in part, operating to:
present an image; and
receive a user input identifying a user-selectable device in the presented image.
Advantageously, said at least one module operates to said present an image by, at least in part, operating to present a real-time image from a camera.
Advantageously, said at least one module operates to said receive device location information by, at least in part, operating to receive information from a user describing a multi-dimensional space associated with a user-selectable device.
Advantageously, said at least one module is operable to receive device identity information from a user-selectable device.
Advantageously, said at least one module is operable to receive communication information describing how to communicate with the user-selectable device.
Advantageously, the communication information comprises communication network address information for the user-selectable device.
Advantageously, the communication information comprises communication protocol information for the user-selectable device.
Advantageously, said at least one module is operable to receive information describing user-interface functionality for the user-selectable device.
Advantageously, said at least one module is operable to said maintain a database by, at least in part, operating to maintain a data structure in which information of a user-selectable device is retrievable by device location.
Advantageously, said at least one module is operable to said maintain a database by, at least in part, operating to maintain a data structure in which information of a user-selectable device is indexed by location on a map.
Advantageously, said at least one module is operable to said maintain a database by, at least in part, operating to maintain a data structure in which information of a user-selectable device is indexed by location in an image.
These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 shows a flow diagram of a non-limiting exemplary method for maintaining a network of user-selectable devices and/or a database characterization thereof, in accordance with various aspects of the present invention.

Figure 2 shows a flow diagram of a non-limiting exemplary method for maintaining a network of user-selectable devices and/or a database characterization thereof, in accordance with various aspects of the present invention.

Figure 3 shows a block diagram of a non-limiting exemplary database for network maintenance and/or characterization, in accordance with various aspects of the present invention.

Figure 4 shows a block diagram of a non-limiting exemplary system for maintaining a network of user-selectable devices and/or a database characterization thereof, in accordance with various aspects of the present invention.

Figure 5 shows a block diagram of a non-limiting exemplary system for maintaining a network of user-selectable devices and/or a database characterization thereof, in accordance with various aspects of the present invention.

Figure 6 shows a block diagram of a non-limiting exemplary system for maintaining a network of user-selectable devices and/or a database characterization thereof, in accordance with various aspects of the present invention.

Figure 7 shows a block diagram of a non-limiting exemplary device for maintaining a network of user-selectable devices and/or a database characterization thereof, in accordance with various aspects of the present invention.

Figure 8 shows a block diagram of a non-limiting exemplary device for maintaining a network of user-selectable devices and/or a database characterization thereof, in accordance with various aspects of the present invention.

### DETAILED DESCRIPTION OF VARIOUS ASPECTS OF THE INVENTION

The following discussion will refer to various modules, components or circuits. Such modules, components or circuits may generally comprise hardware and/or a combination of hardware and software (*e.g*., including firmware). Such modules may also, for example, comprise a computer readable medium (*e.g*., a non-transitory medium) comprising instructions (*e.g*., software instructions) that, when executed by a processor, cause the processor to perform various functional aspects of the present invention. Accordingly, the scope of various aspects of the present invention should not be limited by characteristics of particular hardware and/or software implementations of a module, component or circuit unless explicitly claimed as such. For example and without limitation, various aspects of the present invention may be implemented by one or more processors (*e.g*., a microprocessor, digital signal processor, baseband processor, microcontroller, etc.) executing software instructions (*e.g*., stored in volatile and/or non-volatile memory). Also for example, various aspects of the present invention may be implemented by an application-specific integrated circuit ("ASIC") and/or other hardware components.

Additionally, the following discussion will refer to various system modules (*e.g*., communication modules, processor modules, memory or database modules, user interface modules, etc.). It should be noted that the following discussion of such various modules is segmented into such modules for the sake of illustrative clarity. However, in actual implementation, the boundaries between various modules may be blurred. For example, any or all of the functional modules discussed herein may share various hardware and/or software components. For example, any or all of the functional modules discussed herein may be implemented wholly or in-part by a shared processor executing software instructions. Additionally, various software sub-modules that may be executed by one or more processors may be shared between various software modules. Accordingly, the scope of various aspects of the present invention should not be limited by arbitrary boundaries between various hardware and/or software components, unless explicitly claimed.

The following discussion may also refer to communication networks and various aspects thereof. For the following discussion, a communication network is generally the communication infrastructure through which a communication device (*e.g*., a portable communication device, a personal computer, a network controller, a user-selectable device with network communication capability, a consumer electronic device with network communication capability, etc.) may communicate with other systems. For example and without limitation, a communication network may comprise a cable and/or satellite television communication network, a cellular communication network, a wireless metropolitan area network (WMAN), a wireless local area network (WLAN), a wireless personal area network (WPAN), any home or premises communication network, etc. A particular communication network may, for example, generally have a corresponding communication protocol according to which a communication device may communicate with other devices in and/or via the communication network. Unless so claimed, the scope of various aspects of the present invention should not be limited by characteristics of a particular type of communication network.

In a non-limiting exemplary scenario that comprises various aspects of the present invention, a camera may capture an image (*e.g*., a real-time image) of an environment (*e.g*., a home environment, office environment, etc.) comprising devices that may be monitored and/or controlled by a user. Such image may, for example, be a real-time image, a periodically updated image, an image acquired during system configuration, etc.). A graphical map may also (and/or alternatively), for example, be similarly utilized. The system may then present the image to the user (*e.g*., on a display device, a touch input device, etc.). The user may then identify a device in the image with which the user desires to interact (*e.g*., in a monitoring and/or controlling capacity). For example, the user may touch the device in the image on a touch screen, identify the device with a movable cursor, indicate the image with a light pen, etc. The system may then determine the user-identified device.

The system may, for example, establish a communication link (directly or indirectly) with the user-identified device. The system may then determine user interface options to present to the user. Such user interface options may, for example, be related to monitoring and/or controlling the user-identified device. The system may present the determined user interface options to the user. The system may then interact with the user (*e.g*., presenting user interface options to the user and receiving user input corresponding to such user interface options). The system may then form signals recognized by the user-identified device, where such signals correspond to the user input. Such signals may, for example, comprise data structures, command identifiers, etc., corresponding to a communication protocol understood by the user-identified device. The system may then communicate the formed signal to the user-identified device (*e.g*., utilizing a communication protocol understood by the user-identified device over a communication network to which the user-identified device is communicatively coupled. The system may then, depending on the nature of the user input, continue to interact with the user-identified device, for example transmitting additional commands/information to the user-identified device and/or receiving information from the user-identified device.

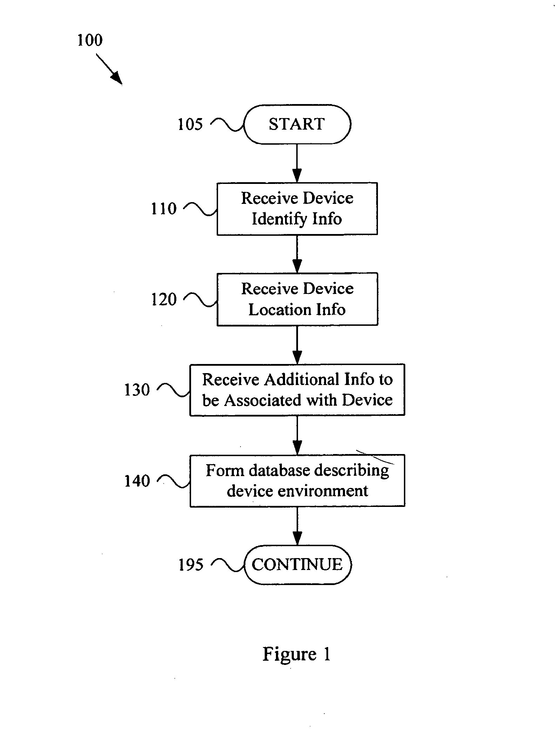

Turning first to Figure 1, such figure shows a flow diagram of a non-limiting exemplary method 100 for maintaining a network of user-selectable devices and/or a database characterization thereof, in accordance with various aspects of the present invention. The method 100 may, for example, be implemented in a network controller device, gateway, router, access point, etc. Such network controller device may, for example, be implemented in a home device (*e.g*., a hub of a home computing network, a home-based desktop computer, a home gateway and/or router, etc.). The method 100 may also, for example, be implemented in a portable computing device. Such a portable computing device may, for example, be a laptop or notebook computer, handheld computing device, cellular phone, personal digital assistant, etc.

The method 100 may begin executing at step 105. The method 100 may begin executing in response to any of a variety of causes and/or conditions, non-limiting examples of which will now be provided. For example, the method 100 may begin executing in response to a user command to begin. Also for example, the method 100 may begin executing in response to detection of the presence of an unknown device within a particular geographic area (*e.g*., within a premises, office, room, suite of rooms, home, campus, etc.). Further for example, the method 100 may begin executing in response to a determination that a device being tracked has moved or has potentially moved. Additionally, for example, the method 100 may begin executing in response to failure to establish a communication link with a device in a particular area (*e.g*., when such device is predicted or previously known to be in such area). Also for example, the method 100 may begin executing upon receiving a user input selecting a location on an image being presented to a user (*e.g*., a user touching an electronic device shown to the user on an image of a room).

The method 100 may, for example at step 110, comprise receiving device identity information from a user. Such device identity information may comprise any of a variety of characteristics, and step 110 may comprise receiving such information in a variety of manners, non-limiting examples of which will now be provided.

Such device identity information may, for example, comprise information indicating the general type of the device (*e.g*., television, television receiver, set top box, satellite receiver, stereo, thermostat, light control, electrical switch, kitchen appliance, telephone, other home appliance, etc.). Such device identity information may, for example, comprise information indicating the manufacturer of the device, model number of the device, serial number of the device, etc. Such device identity information may also, for example, comprise information describing the appearance of the device (*e.g*., size, dimensions, color, shape, distinctive features, lights, heat signature, etc.). Such device identity information may additionally, for example, comprise information describing characteristics of emissions from such device that may be utilized to identify such device (*e.g*., light emissions, RF emissions (*e.g*., beacon characteristics, modulation characteristics, signal strength characteristics, signal timing characteristics, spectral signature characteristics, signal frequency characteristics, signal power characteristics, etc.)).

Step 1 10 may comprise presenting device identity information to a user and receiving device identity information via user selection of such presented identity information. For example, step 110 may comprise presenting the user with a list of devices detected by the system (*e.g*., presently, during a past period of time, at a past point in time, etc.) and/or various characteristics thereof.

Step 110 may also, for example, comprise presenting previously input device information to a user for modification by the user. As a non-limiting example, a user may update device identity information that has changed (*e.g*., due to upgrading, capability enhancements, etc.). As a non-limiting example, step 110 may comprise (*e.g*., in response to a user identification of a previously-defined device) presenting a graphical user interface ("GUI") to a user, where such GUI presents information of the device previously entered by the user and/or acquired automatically in some manner. The user may then, for example, amend and/or append to such device information.

Though step 110 may generally comprise receiving device identity information from a user, step 110 may also comprise electronically determining device identity information also.

In general, step 110 may comprise receiving device identity information from a user. Accordingly, the scope of various aspects of the present invention should not be limited by characteristics of any particular manner of receiving such information, nor by any particular characteristics of such information, unless explicitly claimed.

The exemplary method 100 may, for example at step 120, comprise receiving device location information from a user. Such device location information may comprise any of a variety of characteristics, and step 120 may comprise receiving such information in a variety of manners, non-limiting examples of which will now be provided.

Such device location information may comprise characteristics of any of a variety of different types of location information. For example and without limitation such location information may comprise coordinate information associated with the device's location (*e.g*., global coordinates, coordinates relative to a local reference point, identification of premises at which the device is located, identification of room in which the device is located, identification of a specific location of a premise and/or room, etc.).

Such device location information may, for example, comprise 2-dimensional and/or 3-dimensional information. For example and without limitation, a premises coordinate system may be established, in which a device location may be indicated by information specifying a position on a floor plane and a height above such a floor plane. For example, a device may be located on a shelf of an entertainment center, a kitchen counter, a desk, a bookshelf, a nightstand, on a wall at a particular height, mounted to a wall and/or ceiling, etc.

Such device location information may, for example, also comprise information indicating whether a device is a relatively stationary device (*e.g*., a large television, thermostat, desktop computer, home stereo system component, television receiver, etc.), the position of which might change relatively rarely, or a relatively portable device (*e.g*., a notebook computer, television remote controller, small kitchen appliance, etc.), the position of which might change relatively frequently. Such information may, for example, be useful for system components that may be tasked with tracking the location of devices.

Step 120 may comprise receiving the device location information from the user in any of a variety of manners, non-limiting examples of which will now be presented. For example, step 120 may comprise providing the user with a user interface (*e.g*., a GUI) with which the user may conveniently enter the device location information.

Also for example, step 120 may comprise presenting the user with a graphical map on which the user may indicate (*e.g*., via touch screen and/or cursor manipulation) a particular position (or location) of the device. As a non-limiting example, step 120 may comprise presenting the user with a family room layout on a touch screen, where the user may touch the location on the map that corresponds to the location of the device. Note that such map may be a 2-D and/or 3-D map. For example, a user may move a presented 2-D image (*e.g*., roll, pitch and/or yaw) to input 3-D location information.

Additionally for example, step 120 may comprise presenting the user with a camera image of a particular room. Such an image may, for example, be a stored image created at a previous point in time (*e.g*., prior to execution of the method 100, during a previous execution of the method 100, etc.), or such image may be a real-time image from a camera. Note that the camera (and all cameras discussed herein) may be a stand-alone device communicatively coupled to a communication network and/or may be integrated with any or all of the apparatus discussed herein (*e.g*., physically integrated with an access point, physically integrated with a network controller, physically integrated with a user control device, physically integrated with any of the user-selectable devices discussed herein, etc.).

For example, in an exemplary scenario, a user may specify a particular room at step 120, in response to which step 120 may utilize a camera in the room to obtain a current image of the room. The user may then, for example, specifically indicate the device in the image (*e.g*., via touch screen, cursor movement, etc.). The user may also, for example, specify an area (or volume) associated with the device. For example, step 120 may comprise providing the user with a graphical toolset, by which the user may draw a polygon around the device, circle the device, paint the device, draw an ellipse around the device, define a volume around the device (*e.g*., a sphere, box, etc.), define the device region with a plurality of figures, etc. Such graphical toolset may also comprise tools that automatically provide borders on a selected object (*e.g*., by performing pixel analysis to search for device edges).

Step 120 may comprise repeating such location-inputting procedures for a plurality of maps and/or images. For example and without limitation, step 120 may comprise performing the above mentioned location-inputting operations multiple times. For example, step 120 may comprise performing the map-based input operations for a plurality of maps presented to the user in a plurality of respective spatial orientations. Also for example, step 120 may comprise performing the image-based input operations for a plurality of images presented to the user in a plurality of respective spatial orientations (*e.g*., a plurality of images from the same camera (*e.g*., different camera orientations, different zoom settings, different filter settings, etc.), a plurality of images from different respective cameras, etc.). Step 120 may, for example, utilize such multi-map and/or multi-image device location input to enhance location accuracy and/or to develop a 3-dimensional location mapping.

A previous example mentioned a user indicating a room, in response to which step 120 comprised presenting a map and/or image of such room to the user. Step 120 may similarly comprise providing a user interface by which the user may select a particular camera from which an image is desired. In an exemplary scenario, step 120 may present the user with a list of cameras from which to select (*e.g*., kitchen camera, family room camera 1, family room camera 2, patio camera, pool camera, rec room camera 1, rec room camera 2, office camera 1, office camera 2, front door camera, etc.). The user may then select the desired camera.

In an implementation including utilization of camera images, step 120 may also comprise providing for user control of a selected camera. For example, step 120 may comprise providing a user interface to the user by which the user may control movement of the camera, operation of the camera lens (*e.g*., zoom and/or focus), operation of camera lighting, filtering, resolution, etc. In a non-limiting exemplary scenario, step 120 may comprise providing the user with the ability to zoom in on a desired device to assist the user in selecting a device and/or defining an area and/or volume occupied by such device. Step 120 may thus provide for additional control of an image being presented to the user for use by the user in inputting information identifying location of the device, orientation of the device, spatial characteristics of the device, etc.

Step 120 may also, for example, provide a user interface by which the user may define a selectable region associated with the device. For example, in a first scenario, the selectable region may be associated with the entire area and/or volume defined for the device. In another exemplary scenario, the user may define an area and/or boundary corresponding to a region that, if selected by a user in the future, will result in selection of the device. Such a selectable region may, for example, be larger and/or smaller than the device. For example, in a scenario in which a mapped or imaged area is relatively sparsely populated with selectable devices, the user may define a selectable region that is substantially larger than the device (*e.g*., to make for easy selection of the device in the future). Conversely, in a scenario in which a mapped or imaged area is relatively densely populated with selectable devices, the user may define a selectable region that is substantially smaller than the device (*e.g*., to ensure that the desired device is selected rather than an unintended adjacent device).

As mentioned above, step 120 may also comprise receiving input from a user describing the orientation of an identified device. For example, in various implementations utilizing the exemplary method 100, knowing the orientation of an identified device may be useful (*e.g*., where such device includes directional sensors, directional communication mechanisms, etc.). In an exemplary scenario, step 120 may comprise providing the user with a user interface mechanism by which the user may identify the front face of a device.

As mentioned above, step 120 may (*e.g*., in addition to or in lieu of presenting a real-time image to the user) present an image to the user that was obtained at some point in the past. In a non-limiting exemplary scenario, step 120 may comprise presenting a camera image of a family room to a user, where such image was taken prior to the present execution of the exemplary method 100. In environments that have a relatively static device configuration, such previously obtained image may be utilized for a substantial duration of time before updating. For example, such an image need only be updated when a user-selectable device is moved, added to and/or removed from the pictured or mapped environment.

Also as discussed previously with regard to step 110, various aspects may comprise receiving device identity information automatically. More examples of such automatic receiving will be provided below. With regard to the exemplary method 100, after information of a device and/or the location thereof has been received (*e.g*., at steps 110 and/or 120), the system implementing the method 100 may obtain any of a variety of types of information directly from such identified device. Such obtaining may be performed with and/or without additional user interaction. As a non-limiting example, upon a user identifying a device in an image (*e.g*., by point, area and/or volume), various aspects of the method 100 may comprise analyzing image details of such device (*e.g*., performing pixel analysis, color analysis, grayscale analysis, edge analysis, etc.) to determine a visual characterization of such device that may be used later in identifying the device. For example, the method 100 may comprise determining regions of darkness and/or lightness, creating a histogram including bins of grayscale regions on one axis and number of pixels of a defined area on another axis). Such characterization of an image may be compared to a subsequent image to determine the existence and/or absence of the characterized device (*e.g*., performing image recognition operation).

In general, step 120 may comprise receiving device location information from a user. Accordingly, the scope of various aspects of the present invention should not be limited by characteristics of any particular device location information and/or any particular manner of receiving such information unless explicitly claimed.

The exemplary method 100 may, for example at step 130, comprise receiving additional information to be associated with the device (*e.g*., from a user, from the device, from a commercial enterprise associated with the device, etc.). Such additional information may comprise any of a variety of characteristics, and step 130 may comprise receiving such additional information in any of a variety of manners, non-limiting examples of which will now be presented.

Such additional information may, for example, comprise characteristics of any of a variety of device-related information. For example and without limitation, such additional information may comprise communication network identity information (*e.g*., the identity of communication networks to which the device is or may be communicatively coupled).

Also for example, such additional information may comprise communication network address information. For example, a device may correspond to one or more communication network addresses. A device may, for example, be associated with one or more addresses on each communication network through which communication may be established with the device. Such address information may be static address information (*e.g*., an address always associated with the device, an address always associated with the device on a particular network, etc.), or such address information may be dynamic address information (*e.g*., an address assigned to the device periodically, upon entry into a particular communication network, upon power-up, upon reset, etc.). Such address information may, for example, be universal address information and/or local address information.

Additionally for example, such additional information may comprise protocol information associated with the device. Such protocol information may, for example, comprise information identifying communication network protocols with which the device may communicate. Such protocol information may also, for example, comprise information identifying protocols other than communication network protocols with which the device may communicate (*e.g*., protocols associated with communication layers above relatively lower-level communication network protocols (*e.g*., application layer protocols)).

Further for example, such additional information may comprise information describing bandwidth requirements for communicating with such device. Such bandwidth requirement information may, for example, comprise information of an amount of bandwidth, an indication of whether such bandwidth need be guaranteed and/or non-guaranteed, etc. Such additional information may comprise information describing other communication requirements for the device (*e.g*., latency requirements or limits, sleep mode behavior, etc.).

Also for example, such additional information may comprise information describing secure communication operation of the device. For example, such information may comprise access code information (*e.g*., user ID information, password information, etc.). Additionally for example, such information may comprise encryption/decryption key information (*e.g*., public key information, random number generator seed information, etc.).

Such additional information may, for example, comprise device control information (which may, *e.g*., be tied in with upper layer protocol information). For example, such device control information may comprise a list of commands to which the device may respond. Such list of commands may, for example, comprise a list of commands that a remote user may communicate to the device to monitor and/or control operation of such device. In a non-limiting exemplary scenario, such command information may comprise a list of commands to turn the device on and/or off, change channels, change audio and/or video output settings, select an audio and/or video input, change temperature, change antenna settings, set a timer, command camera operation, select an audio file and/or video file to play, establish a recording profile for a recording device, set and/or reset a timed alarm, specify operation of home and/or office security systems, monitor any facet of device operation that may be monitored, monitor device output, monitor camera images, monitor temperature, monitor and/or control environmental control systems, etc.

Such additional information may comprise information describing how and/or where to manage information stored in the device (*e.g*., file structure information, file access information, database information, etc. Also for example, such additional information may comprise information describing internal register addresses for the device that may be accessed by an external device.

Such additional information may, for example, comprise user interface information. As mentioned above, the additional information may comprise command (or monitoring) information. Such additional information may, for example, also comprise information describing how such command information is to be provided to a user and received from the user. For example, such additional information may comprise information describing an order in which command options are to be presented to a user and/or when such command options are to be presented to the user. Also for example, such additional information may comprise information describing which commands to present to the user and in which circumstances such commands are to be presented to the user.

Additionally for example, such additional information may comprise information describing how various command options should be presented to the user. For example, such additional information may comprise detailed descriptions of graphical user interface features to present to the user. For example, such information may comprise graphical descriptors, bitmaps, display location information, color information, settings for cookbook predefined graphical features, etc. For example, in a scenario involving monitoring various characteristics of a device, such additional information may comprise information describing the manner in which monitored characteristics should be presented to the user (*e.g*., numerical characteristics, size/font characteristics, graphical information output constructs (*e.g*., graphs, dials, colors, etc.), audio characteristics, etc.).

Note that though step 130 may generally comprise receiving information from a user, step 130 may also comprise receiving such additional information from the device itself, from a manufacturer of the device or other commercial enterprise associated with the device (*e.g*., via communication network), etc.

In general, step 130 may comprise receiving additional information to be associated with the device. Accordingly, the scope of various aspects of the present invention should not be limited by characteristics of any particular type of additional information and/or any particular manner of receiving such additional information unless explicitly claimed.

The exemplary method 100 may, at step 140, comprise generating a database (*e.g*., a data structure organizing the above-mentioned information) relating the information received at steps 110, 120 and 130. Such a database, for example, may be viewed as a description of an environment of selectable devices (*e.g*., an environment of devices selectable by a user for monitoring and/or controlling). Such a database may comprise any of a variety of characteristics, and step 140 may comprise forming such a database in any of a variety of manners, non-limiting examples of which will now be provided.

For example and without limitation, step 140 may comprise forming a set (*e.g*., an array or list) of data records, each data record corresponding to a respective device to which a user device may communicatively couple (*e.g*., directly and/or indirectly via intervening network devices). For example, a record may comprise elements corresponding to any or all of the previously discussed device identity information. Also for example, the record may comprise elements corresponding to any or all of the previously discussed device location information. Additionally for example, the record may comprise elements corresponding to any or all of the previously discussed additional information types.

For example, step 140 may comprise forming an overall data structure in which each of the device records may be indexed (or accessed) according to device location. For example, the overall data structure may be sorted in an array (or linked list and/or tree structure) or other database of records such that a specified location may be utilized to retrieve a respective record of a device positioned at such location.

Also for example, step 140 may comprise linking area regions of one or more 2-D images to respective device records. Such regions may, for example, be as defined by a user at step 120. Additionally for example, step 140 may comprise linking a graphical construct in a 2-D and/or 3-D map to a respective device record.

Step 140 may, for example, comprise providing an interface by which other system components (*e.g*., system components within a system device implementing the method 100 or separate from such a system device) may access such database. For example, step 140 may comprise providing a hardware mechanism (*e.g*., solely hardware and/or hardware executing software instructions and/or processing data structure information) by which other systems may utilize the formed data structure.

Also for example, step 140 may comprise providing such an interface mechanism (*e.g*., a suite of access methods) in the form of processor instructions that, when executed by a processor cause the processor to provide the record access functionality. Such instructions may, for example, be stored in a computer-readable medium (*e.g*., a non-transitory medium).

In a non-limiting exemplary scenario, step 140 may comprise providing a search interface by which a system component may input an identified location and output, in response to such input identified location, information associated with the device at such input identified location (*e.g*., any or all of the information discussed above). For example, step 140 may comprise providing an interface mechanism that operates to receive location information and returns networking information for a device located at the received location. Further for example, step 140 may comprise providing an interface mechanism that operates to receive location information and return protocol information associated with a device at such location. Additionally for example, step 140 may comprise providing an interface mechanism that operates to receive location information and return control information associated with a device at such location. Also for example, step 140 may comprise providing an interface mechanism that operates to receive location information and return user interface information associated with a device at such location. The discussion below will present a variety of non-limiting illustrations of the utilization and/or operation of such a search interface.

The database (or data structure) may be generally organized by device location. A top layer of such organization may, for example, comprise one or more images and/or maps of a geographical area (*e.g*., of a premises, room, office, campus, etc.). In a first exemplary scenario, the device environment may be described at a top layer in terms of a map (*e.g*., a 2-D and/or 3-D map) of a geographical area (*e.g*., a premises, office, room, campus, etc.) that shows objects corresponding to the various devices. Indication one of such objects (*e.g*., by a user interacting with one or more of such maps) may, for example, provide access to any of the variety of types of information discussed above associated with such device. In a second exemplary scenario, the device environment may be described at a top layer in terms of one or more camera images on which particular points, areas or sub-images may correspond to the various devices. Indication of one of such objects (*e.g*., by a user interacting with such one or more camera images) may, for example, provide access to any of the variety of information discussed above associated with such device. In either of the above-mentioned scenarios, step 140 may comprise providing a user interface mechanism (*e.g*., a GUI) by which a user may indicate a feature on a map and/or image. Such scenarios will be described in more detail below.

In general, step 140 may comprise generating a database (or other data structure) relating the information received at steps 110, 120 and 130. Accordingly, the scope of various aspects of the present invention should not be limited by characteristics of any particular database (or data structure) characteristics and/or any particular manner of forming and/or utilizing such a database unless explicitly claimed.

The exemplary method 100 may, for example at step 195, comprise performing continued operational steps. Such continued operation may comprise any of a variety of types of continued operation, non-limiting examples of which will now be provided.

Step 195 may, for example, comprise looping execution flow of the exemplary method 100 to any previous step. Also for example, step 195 may comprise utilizing the information received at steps 110, 120 and 130, and/or the database or data structure formed at step 140. Step 195 may comprise performing such utilization in any of a variety of manners (*e.g*., remote device identification, network formation, remote control, etc.).

Step 195 may, for example, comprise automatically managing a network of user-selectable devices described in the database formed at step 140 in any of a variety of manners. Also for example, step 195 may comprise providing for remote user selection of and/or interaction with a user-selectable device described in the database formed at step 140 in any of a variety of manners. Additionally for example, step 195 may comprise providing for remote monitoring and/or controlling devices described in the database formed at step 140 in any of a variety of manners.

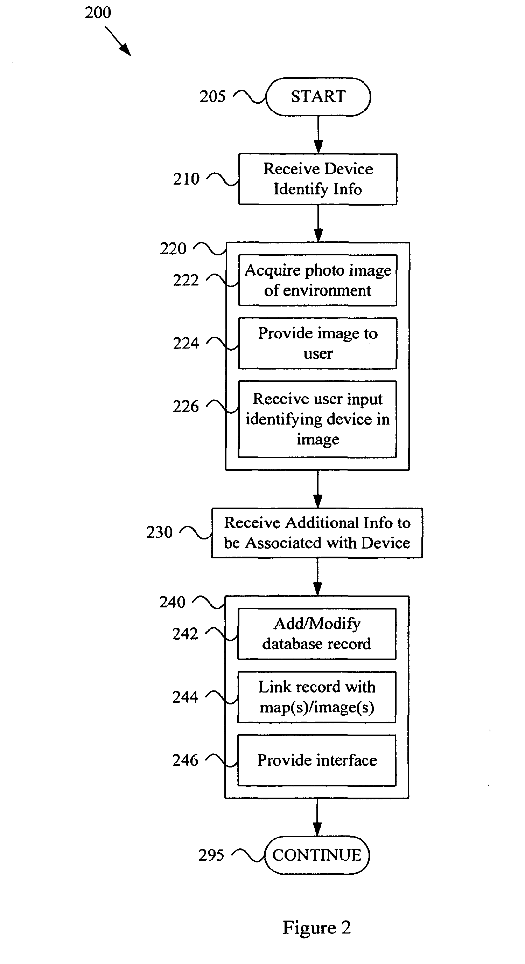

Figure 2 shows a flow diagram of a non-limiting exemplary method 200 for maintaining a network of user-selectable devices and/or a database characterization thereof, in accordance with various aspects of the present invention. The exemplary method 200 may share any or all aspects with the exemplary method 100 discussed previously.

The exemplary method 200 may, for example at steps 205-210, share any or all aspects with steps 105-110 of the exemplary method 100 illustrated in Figure 1 and discussed previously. The exemplary method 200 may, for example at step 220, comprise receiving device location information from a user. Step 220 may, for example, share any or all characteristics with step 120 discussed above.

Step 220 may, for example at sub-step 222, comprise acquiring an image of an area in which the device is located. Such image acquisition may, for example, comprise utilizing a camera to obtain a real-time image and/or may comprise retrieving a non-real-time previously-obtained image from memory (*e.g*., an image originally acquired prior to execution of the method 200).

Step 220 may, for example at sub-step 224, comprise providing the acquired image to the user. For example, sub-step 224 may comprise outputting the image on a display of the system implementing the method 200 (*e.g*., a network controller or manager, a personal mobile computing device of the user, a distributed system, etc.). Also for example, sub-step 224 may comprise communicating the image to a remote device (*e.g*., a mobile computing device) of the user, where such remote device is remote from the system implementing the method 200.

Step 220 may, for example at sub-step 226, comprise receiving user input identifying a user-selectable device in the presented image. As explained above, such user input may comprise any of a variety of information, including without limitation, device point location, device area definition, device volume definition, device spatial orientation, etc. In an exemplary scenario, sub-step 226 may comprise receiving such information via a user interface device of the system implementing the method 200. In another exemplary scenario, sub-step 226 may comprise receiving such information from a remote device (*e.g*., a mobile computing device) of the user via a communication link (*e.g*., a wireless and/or wired communication link).

In general, step 220 may comprise receiving device location information from a user. Accordingly, the scope of various aspects of the present invention should not be limited by characteristics of any particular device location information and/or any particular manner of receiving such information unless explicitly claimed.

The exemplary method 200 may, for example at step 230 comprise receiving additional information to be associated with the device (*e.g*., from a user, from the device, from a commercial enterprise associated with the device, etc.). Step 230 may, for example, share any or all aspects with step 130 of the exemplary method 100 illustrated in Figure 1 and discussed previously.

The exemplary method 200 may, for example at step 240, comprise generating a database (or other data structure) relating the information received at steps 210, 220 and 230. Such a database, for example, may be viewed as a description of an environment of selectable devices. Step 240 may, for example, share any or all characteristics with step 140 discussed previously.

Step 240 may, for example at sub-step 242, comprise maintaining database records associated with one or more devices. Sub-step 242 may comprise forming (*e.g*., adding and/or modifying) records comprising any or all of the information discussed above relating to various devices in the environment. Such database records may, for example, be stored in a non-transitory computer-readable medium (*e.g*., in a non-volatile memory) of a network controller or manager, a mobile/portable computing device of the user, etc.).

Step 240 may, for example at sub-step 244, comprise linking the respective database records with respective location information for the respective devices. For example, device records may be linked with 2-D and/or 3-D coordinate and/or mapping information, regions of one or more camera images (which may also be stored in the database), etc.

Step 240 may, for example, at sub-step 246, comprise providing an interface by which other system components may utilize the data structures stored in the database. As discussed previously, such an interface may, for example, comprise modules that operate to retrieve particular information about a device provided location information, and any of a variety of other interfaces. Such interfaces may, for example, comprise hardware and/or a combination of hardware and software. For example, such modules may comprise software routines and/or interface definitions that, when executed by a processor, cause the processor to provide the desired interface. Such routines and/or interface definitions may, for example, be stored in a non-transitory computer-readable medium of a network controller or manager, a mobile/portable computing device of the user, etc.). Such routines and/or interface definitions may, for example, be stored in a same memory device as the database records discussed above, may be stored in separate memory devices and/or may be stored in separate and remotely located memory devices.

In general, step 240 may comprise generating a database (or other data structure) relating the information received at steps 210, 220 and 230. Accordingly, the scope of various aspects of the present invention should not be limited by characteristics of any particular database (or data structure) characteristics and/or any particular manner of forming and/or utilizing such a database unless explicitly claimed.

The exemplary method 200 may, for example at step 295, comprise performing continued operational steps. Step 295 may, for example, share any or all aspects with step 195 of the exemplary method 100 illustrated in Figure 1 and discussed previously.

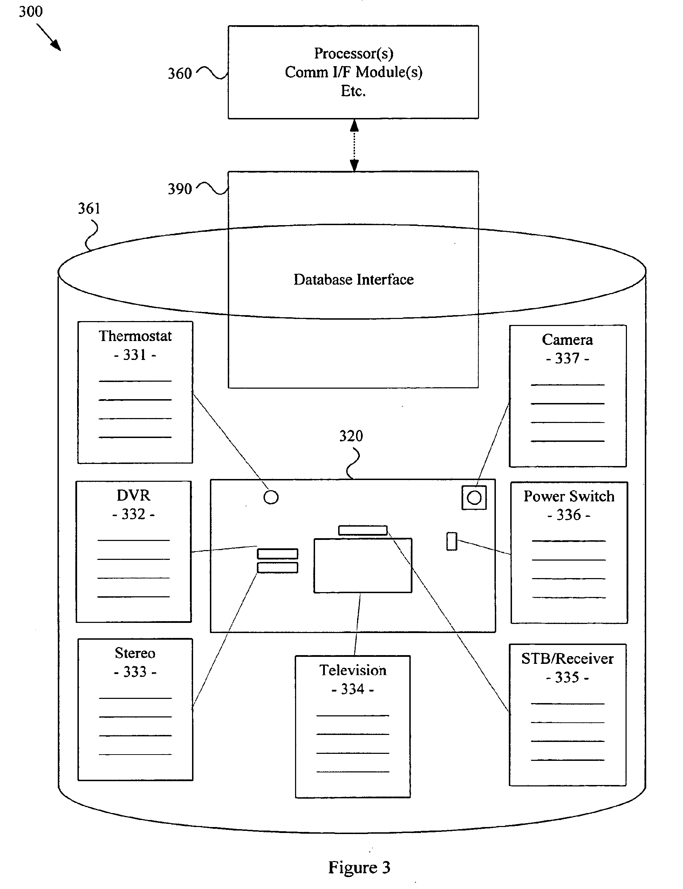

Figure 3 shows a block diagram 300 of a non-limiting exemplary database for network maintenance and/or characterization, in accordance with various aspects of the present invention.

The previous discussion (*e.g*., the discussion of steps 140 and 240) mentioned the formation and/or maintenance of a database where devices of an image and/or map may be related to respective device records that include any of a variety of types of device information (many examples of which were provided above). For example, the database may comprise a memory 361. Such memory 361 may, for example, be a non-volatile memory (or other non-transitory data retention device), such as a magnetic disk hard drive, optical disk drive, CD, DVD, laser disc, Blueray disc, diskette, flash drive, EPROM, EEPROM, flash memory, etc.

The memory 361 may, in the illustrated example, include information of an image 320 (or map or plurality of images or maps), where areas or features of the image may be related to records, which may also be stored in the memory 361. For example, the image 320 may comprise a still photograph or other camera image.

The image 320 may comprise an image of a thermostat that is linked to a thermostat record 331. The image 320 may also comprise an image of a DVR that is logically linked to a DVR record 332, an image of a stereo that is logically linked to a stereo record 333, an image of a television that is logically linked to a television record 334, an image of a set top box ("STB") and/or TV receiver that is logically linked to an STB/Receiver record 335, an image of a power switch that is logically linked to a power switch record 336 and an image of a camera that is logically linked to a camera record 337. As discussed previously, the devices of the image 320 (or environment) may be defined by respective areas (*e.g*., boxes, outlines, etc.) input by a user and/or automatically defined (*e.g*., utilizing pixel analysis).

Also as discussed previously in the discussion of the methods of Figures 1 and 2, various aspects of the present invention may comprise providing a database interface 390 by which other processes may access and utilize the information stored in the memory 361. As discussed previously, such interface 390 may be implemented in a variety of manners. For example, such interface 390 may be implemented by a processor 360 or other hardware device executing instructions, which may, for example, be stored in the memory 361 or another memory (*e.g*., either collocated with the memory 361 or geographically distinct from the memory 361. The database interface 390 may comprise modules stored in a variety of locations (e.g., at a central controller, server, gateway, access point, and/or user computing device).

The system 300 illustrated in Figure 3 also comprises one or more processors, communication interface modules, or any other hardware components 360 that may interact with the memory 361 via the database interface 390.

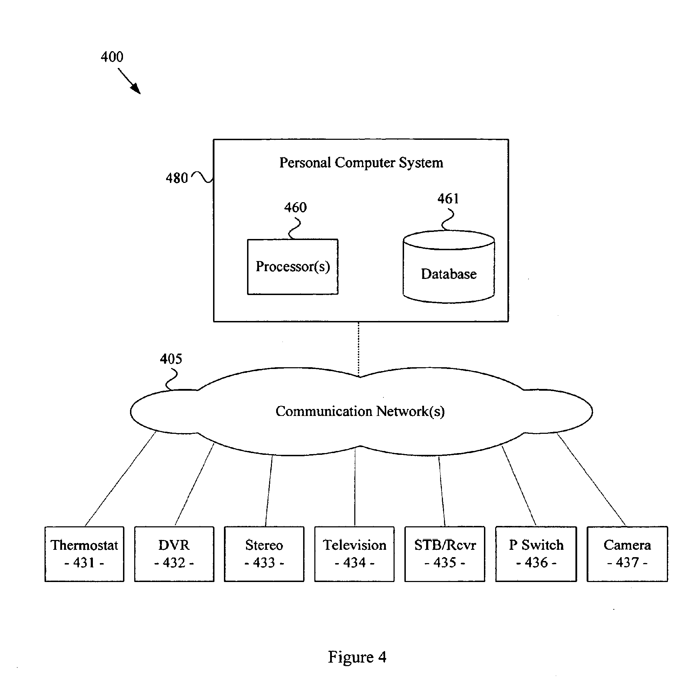

Figure 4 shows a block diagram of a non-limiting exemplary system 400 for maintaining a network of user-selectable devices and/or a database characterization thereof, in accordance with various aspects of the present invention. The exemplary system 400 (or components thereof) may operate to perform any or all of the functional characteristics discussed herein (*e.g*., with regard to the exemplary methods 100 and 200, with regard to the exemplary database 300, etc.).

The exemplary system 400 may, for example, comprise a personal computer system 480, which is communicatively coupled to a variety of devices via one or more communication networks 405 (*e.g*., the Internet, a telecommunication network, cable television network, satellite communication network, local area network, personal area network, metropolitan area network, wide area network, campus network, home network, etc.). Such network(s) may, for example, be wired, wireless RF, tethered optical, non-tethered optical, etc.

As a non-limiting example, the personal computer system 480 (*e.g*., a laptop or notebook computer, desktop computer, handheld computer, cellular telephone with computing capability, personal digital assistant, etc.) may comprise one or more processors 460 and a database 461. The personal computer system 480 may, for example, operate to perform any or all of the method steps discussed previously. For example, the database 461 may comprise any or all database characteristics discussed herein.

The personal computer system 480 may, for example, operate to maintain a network, and/or characterization thereof (*e.g*., in the database 461), that comprises any or all of the previously exemplified thermostat 431, DVR 432, stereo 433, television 434, STB/Rcvr 435, power switch 436 and camera 437. As a non-limiting example, the processor 460 may operate to maintain a network and/or network characterization thereof (*e.g*., in the database 461) comprising any or all of such devices.

For example, an operator of the personal computer system 480 may, for example, operate to select any of the devices (*e.g*., selecting such device(s) on a map and/or image), in response to which the personal computer system 480 (or component thereof) may interface with the database 461 to retrieve information about the selected device. The personal computer system 480 may then (*e.g*., utilizing a communication module) operate to establish a communication link with the selected device and provide the user with the capability to monitor and/or control the selected device.

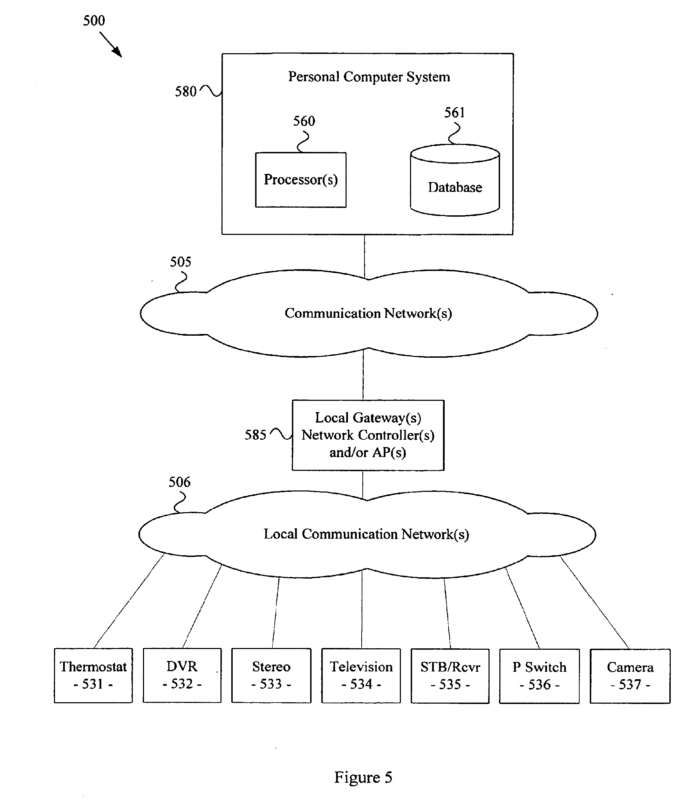

Figure 5 shows a block diagram of a non-limiting exemplary system 500 for maintaining a network of user-selectable devices and/or a database characterization thereof, in accordance with various aspects of the present invention. The exemplary system 500 (or components thereof) may operate to perform any or all of the functional characteristics discussed herein (*e.g*., with regard to the exemplary methods 100 and 200 illustrated in Figures 1 and 2, with regard to the exemplary database illustrated in Figure 3, with regard to the exemplary system 400 illustrated in Figure 4, etc.).

The exemplary system 500 may, for example, comprise a personal computer system 580, which is communicatively coupled to a gateway, network controller and/or access point 585 via one or more communication networks 505 (*e.g*., the Internet, a telecommunication network, cable television network, satellite communication network, local area network, personal area network, metropolitan area network, wide area network, campus network, home network, etc.). Such network(s) may, for example, be wired, wireless RF, tethered optical, non-tethered optical, etc.

The gateway, network controller and/or access point 585, in turn, is communicatively coupled to a variety of devices via one or more local communication networks 506 (*e.g*., local area network(s), personal area network(s), home network(s), office network(s), etc.). Such local communication network(s) may, for example, be wired, wireless RF, tethered optical, non-tethered optical, etc.

As a non-limiting example, the personal computer system 580 (*e.g*., a laptop or notebook computer, desktop computer, handheld computer, cellular telephone with computing capability, personal digital assistant, etc.) may comprise one or more processors 560 and a database 561. The personal computer system 580 may, for example, operate to perform any or all of the method steps discussed previously. For example, the database 561 may comprise any or all database characteristics discussed herein.

The personal computer system 580 may, for example, operate to maintain a network, and/or characterization thereof (*e.g*., in the database 561), that comprises any or all of the previously exemplified thermostat 531, DVR 532, stereo 533, television 534, STB/Rcvr 535, power switch 536 and camera 537. As a non-limiting example, the processor 560 may operate to maintain a network and/or network characterization thereof (*e.g*., in the database 561), comprising any or all of such devices.

For example, an operator of the personal computer system 580 may, for example, operate to select any of the devices (*e.g*., selecting such device(s) on a map and/or image), in response to which the personal computer system 580 (or component thereof) may interface with the database 561 to retrieve information about the selected device. The personal computer system 580 may then (*e.g*., utilizing a communication module) operate to establish a communication link with the selected device via the communication network(s) 505; local gateway, network controller and/or access point 585; and communication network(s) 506; and provide the user with the capability to monitor and/or control the selected device.

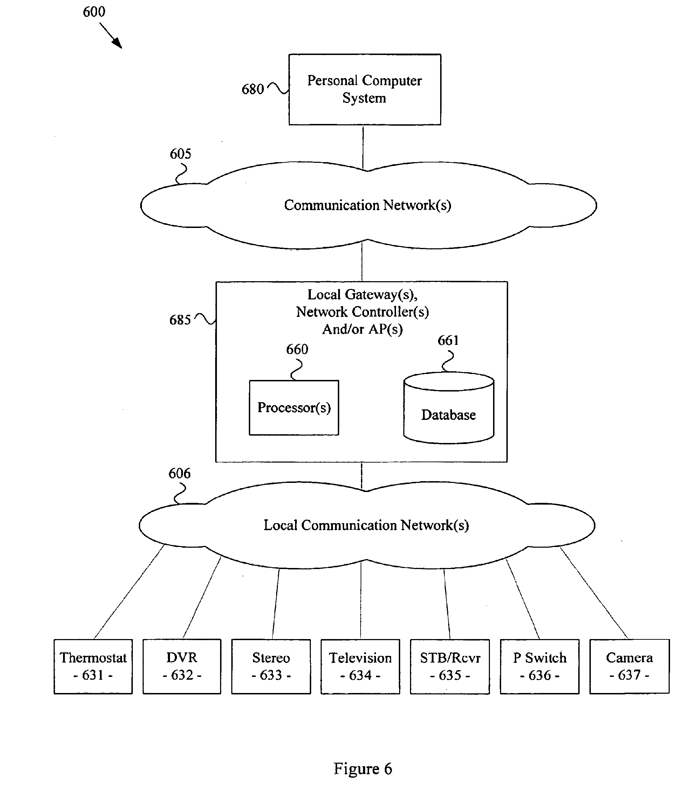

Figure 6 shows a block diagram of a non-limiting exemplary system 600 for maintaining a network of user-selectable devices and/or a database characterization thereof, in accordance with various aspects of the present invention. The exemplary system 600 (or components thereof) may operate to perform any or all of the functional characteristics discussed herein (*e.g*., with regard to the exemplary methods 100 and 200 illustrated in Figures 1 and 2, with regard to the exemplary database illustrated in Figure 3, with regard to the exemplary systems 400 and 500 illustrated in Figures 4 and 5, etc.).

The exemplary system 600 may, for example, comprise a personal computer system 680, which is communicatively coupled to a gateway, network controller and/or access point 685 via one or more communication networks 605 (*e.g*., the Internet, a telecommunication network, cable television network, satellite communication network, local area network, personal area network, metropolitan area network, wide area network, campus network, home network, etc.). Such network(s) may, for example, be wired, wireless RF, tethered optical, non-tethered optical, etc.

The gateway, network controller and/or access point 685, in turn, is communicatively coupled to a variety of devices via one or more local communication networks 606 (*e.g*., local area network(s), personal area network(s), home network(s), office network(s), etc.). Such local communication network(s) may, for example, be wired, wireless RF, tethered optical, non-tethered optical, etc.

As a non-limiting example, the gateway, network controller and/or access point 685 may comprise one or more processors 660 and a database 661. The gateway, network controller and/or access point 685 may, for example, operate to perform any or all of the method steps discussed previously. For example, the database 661 may comprise any or all database characteristics discussed herein.

The gateway, network controller and/or access point 685 may, for example, operate to maintain a network, and/or characterization thereof (*e.g*., in the database 661), that comprises any or all of the previously exemplified thermostat 631, DVR 632, stereo 633, television 634, STB/Rcvr 635, power switch 636 and camera 637. As a non-limiting example, the processor 660 may operate to maintain a network and/or network characterization thereof (*e.g*., in the database 661) comprising any or all of such devices.

For example, an operator of the personal computer system 680 may, for example, operate to select any of the devices (*e.g*., selecting such device(s) on a map and/or image), in response to which the gateway, network controller and/or access point 685 (or component thereof) may interface with the database 661 to retrieve information about the selected device. The gateway, network controller and/or access point 685 may then (*e.g*., utilizing one or more communication modules) operate to establish a communication link with the selected device via the communication network(s) 606, and establish a communication pathway between the personal computer system 680 and the selected device. The gateway, network controller and/or access point 685 local gateway, network controller and/or access point 685 may then operate to provide the user of the personal computer system 680 with the capability to monitor and/or control the selected device.

Note that, as opposed to the exemplary systems 400, 500 illustrated in Figures 4 and 5, the exemplary system 600 locates most of the previously discussed functionality in the gateway, network controller and/or access point 685 (*e.g*., as opposed to the personal computer system 680). Such an implementation may, for example, remove system complexity from the personal computer 680, which may for example have limited energy, memory and/or processing capabilities, and place such complexity in a central location. Such an arrangement also provides for a plurality of personal computer systems to perform the disclosed operation with a minimum of additional complexity.

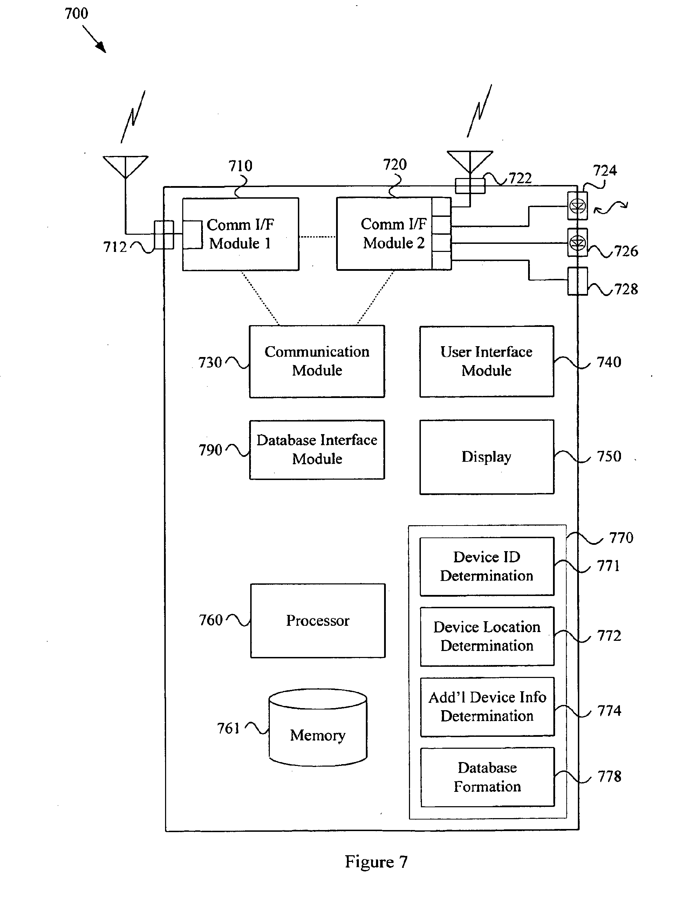

Figure 7 shows a block diagram of a non-limiting exemplary device (or system) 700 for maintaining a network of user-selectable devices and/or a database characterization thereof, in accordance with various aspects of the present invention. The exemplary device 700 (or various components thereof) may, for example, operate to perform any or all functionality discussed previously with regard to Figures 1-6. Also for example, the exemplary device 700 may share any or all characteristics with the database system 300 and/or personal computer systems 480, 580 and 680 discussed previously. Additionally for example, the exemplary device 700 may share any or all characteristics with the local gateways, remote controllers and/or access points 585, 685 discussed previously. Further for example, the exemplary device 700 may share any or all characteristics with the exemplary device (*e.g*., terminal devices) 331-337, 431-437, 531-537 and 631-637 discussed previously.

The exemplary device 700 may, for example, comprise a first communication interface module 710. The first communication interface module 710 may, for example, operate to communicate over any of a variety of communication media and utilizing any of a variety of communication protocols. For example, though the first communication interface module 710 is illustrated coupled to a wireless RF antenna via a wireless port 712, the wireless medium is merely illustrative and non-limiting. The first communication interface module 710 may, for example, operate to communicate with one or more communication networks (*e.g*., cable television networks, satellite television networks, telecommunication networks, the Internet, local area networks, personal area networks, metropolitan area networks, etc.) via which data is communicated.

The exemplary device 700 comprises a second communication interface module 720. The second communication interface module 720 may, for example, operate to communicate over any of a variety of communication media and utilizing any of a variety of communication protocols. For example, the second communication interface module 720 may communicate via a wireless RF communication port 722 and antenna, or may communicate via a non-tethered optical communication port 724 (*e.g*., utilizing laser diodes, photodiodes, etc.). Also for example, the second communication interface module 720 may communicate via a tethered optical communication port 726 (*e.g*., utilizing a fiber optic cable), or may communicate via a wired communication port 728 (*e.g*., utilizing coaxial cable, twisted pair, HDMI cable, Ethernet cable, any of a variety of wired component and/or composite video connections, etc.). The second communication interface module 720 may, for example, operate to communicate with one or more communication networks (*e.g*., cable television networks, satellite television networks, telecommunication networks, the Internet, local area networks, personal area networks, metropolitan area networks, etc.) via which data is communicated. Also for example, the second communication module 720 may operate to communicate with local devices.

The exemplary device 700 may also comprise additional communication interface modules, which are not illustrated. Such additional communication interface modules may, for example, share any or all aspects with the first 710 and second 720 communication interface modules discussed above.

The exemplary device 700 may also comprise a communication module 730. The communication module 730 may, for example, operate to control and/or coordinate operation of the first communication interface module 710 and the second communication interface module 720 (and/or additional communication interface modules as needed). The communication module 730 may, for example, provide a convenient communication interface by which other components of the device 700 may utilize the first 710 and second 720 communication interface modules. Additionally, for example, in an exemplary scenario where a plurality of communication interface modules are sharing a medium and/or network, the communication module 730 may coordinate communications to reduce collisions and/or other interference between the communication interface modules 710, 720.

The exemplary device 700 may additionally comprise one or more user interface modules 740. The user interface module(s) 740 may generally operate to provide user interface functionality to a user of the device 700. For example, the user interface module(s) 740 may operate to perform any or all of the exemplary user interface functionality discussed herein (*e.g*., with regard to any of Figures 1-6). For example, and without limitation, the user interface module(s) 740 may operate to provide for user control of any or all standard device commands. The user interface module(s) 740 may, for example, operate and/or respond to user commands utilizing user interface features disposed on the device 700 (*e.g*., buttons, touch screen, microphone, etc.) and may also utilize the communication module 730 (and/or first 710 and second 720 communication interface modules) to communicate with the device 700 and/or any device that is communicatively coupled thereto (*e.g*., to control any monitoring and/or controlling functionality discussed herein). The user interface module 740 may also operate to interface with and/or control operation of any of a variety of sensors that may be utilized to ascertain an on-screen pointing location. As discussed elsewhere herein, the user may specify location and/or other characteristics of a device.

The exemplary device 700 may comprise a display 750. As discussed elsewhere herein, the user may utilize a display to view and/or interact with maps and/or images of network environments (*e.g*., for device location input and/or definition, for device selection, etc.). Such interaction may, for example, utilize a display 750 of the device 700, which may also, for example, be utilized for user input (*e.g*., as a touch screen, utilizing cursor control, etc.).

The exemplary device 700 may comprise one or more processors 760. The processor(s) 760 may, for example, comprise a general purpose processor, digital signal processor, application-specific processor, microcontroller, microprocessor, etc. The processor(s) 760 may, for example, share any or all characteristics with processors discussed elsewhere herein (*e.g*., processors 360, 460, 560 and 660). For example, the processor 760 may operate in accordance with software (or firmware) instructions. As mentioned previously, any or all functionality discussed herein may be performed by a processor executing instructions. For example, though various modules are illustrated as separate blocks or modules in Figure 7 for illustrative clarity, such illustrative modules, or a portion thereof, may be implemented by the processor(s) 760.

The exemplary device 700 may comprise one or more memories 761. As discussed above, various aspects may be performed by one or more processors executing instructions. Such instructions may, for example, be stored in the one or more memories 761. Such memory 761 may, for example, comprise characteristics of any of a variety of types of memory. For example and without limitation, such memory 761 may comprise one or more memory chips (*e.g*., ROM, RAM, EPROM, EEPROM, flash memory, one-time-programmable OTP memory, etc.), hard drive memory, CD memory, DVD memory, etc. Also for example, the memory 761 may share any or all characteristics with any of the databases discusses herein (*e.g*., databases 361, 461, 561 and 661).

The exemplary device 700 may also comprise one or more device ID determination modules 771. Such module(s) 771 may, for example and without limitation, operate to (including, for example, operate when enabled to) perform any or all of the functionality discussed herein with regard to receiving device identify information (*e.g*., at steps 110 and 210).

The exemplary device 700 may also comprise one or more device location determination modules 772. Such module(s) 772 may, for example and without limitation, operate to (including, for example, operate when enabled to) perform any or all of the functionality discussed herein with regard to receiving device identify information (*e.g*., at steps 120 and 220).

The exemplary device 700 may also comprise one or more additional device information determination modules 774. Such module(s) 774 may, for example and without limitation, operate to (including, for example, operate when enabled to) perform any or all of the functionality discussed herein with regard to receiving additional device information (*e.g*., at steps 130 and 230).

The exemplary device 700 may also comprise one or more database formation modules 778. Such module(s) 778 may, for example and without limitation, operate to (including, for example, operate when enabled to) perform any or all of the functionality discussed herein with regard to forming and/or maintaining the communication network and/or network descriptions discussed herein (*e.g*., at steps 140 and 240).

The exemplary device 700 may also comprise one or more database interface modules 790. Such module(s) 790 may, for example and without limitation, operate to perform any or all of the database interface functionality discussed herein.

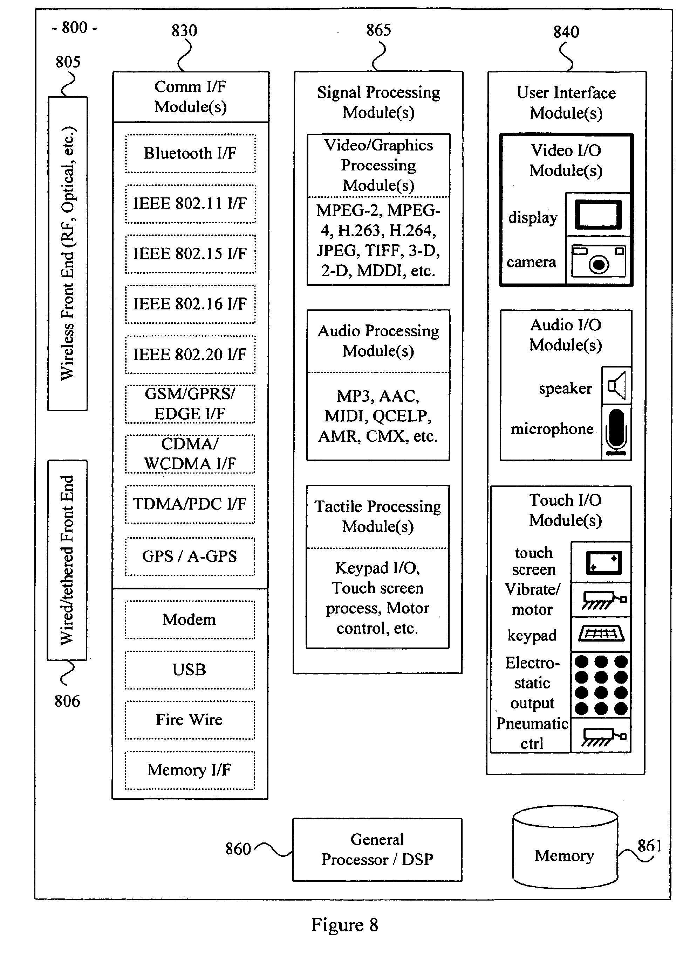

Figure 8 shows a block diagram of a non-limiting exemplary device 800 for maintaining a network of user-selectable devices and/or a database characterization thereof, in accordance with various aspects of the present invention. Figure 7 provided a diagram illustrating an exemplary device (or system) 700 in accordance with various aspects of the present invention. Figure A8 provides another diagram illustrating an exemplary device (or system) 800 in accordance with various aspects of the present invention.

The exemplary device 800 may share any or all aspects with any of the devices (*e.g*., portable computer devices, access points, gateways, network controllers, terminal devices, etc.) discussed herein (*e.g*., with regard to Figures 1-7). For example, the exemplary device 800 (or various modules thereof) may operate to perform any or all functionality discussed herein. As with the exemplary device 700, the components of the exemplary device 800 may be co-located a single housing.

For example, the device 800 comprises a processor 860. Such a processor 860 may, for example, share any or all characteristics with the processor 760 discussed with regard to Figure 7. Also for example, the device 800 comprises a memory 861. Such memory 861 may, for example, share any or all characteristics with the memory 761 discussed with regard to Figure 7.

Also for example, the exemplary device (or system) 800 may comprise any of a variety of user interface module(s) 840. Such user interface module(s) 840 may, for example, share any or all characteristics with the user interface module(s) 740 discussed previously with regard to Figure 7. For example and without limitation, the user interface module(s) 840 may comprise: a display device, a camera (for still or moving picture acquisition), a speaker, an earphone (*e.g*., wired or wireless), a microphone, a video screen (e.g*.,* a touch screen display), a vibrating mechanism, a keypad, a remote control interface, and/or any of a variety of other user interface devices (*e.g*., a mouse, a trackball, a touch pad, touch screen, light pen, game controlling device, etc.).

The exemplary device 800 may also, for example, comprise any of a variety of communication modules (805, 806, and 830). Such communication module(s) may, for example, share any or all characteristics with the communication interface module(s) 710, 720 and the communication module 730 discussed previously with regard to Figure 7. For example and without limitation, the communication interface module(s) 830 may comprise: a Bluetooth interface module; an IEEE 802.11, 802.15, 802.16 and/or 802.20 module; any of a variety of cellular telecommunication interface modules (*e.g*., GSM/GPRS/EDGE, CDMA/CDMA2000/1x-EV-DO, WCDMA/HSDPA/HSUPA, TDMA/PDC, WiMAX, etc.); any of a variety of position-related communication interface modules (*e.g*., GPS, A-GPS, etc.); any of a variety of wired/tethered communication interface modules (*e.g*., USB, Fire Wire, RS-232, HDMI, component and/or composite video, Ethernet, wire line and/or cable modem, etc.); any of a variety of communication interface modules related to communicating with external memory devices; etc. The exemplary device 800 is also illustrated as comprising various wired 806 and/or wireless 805 front-end modules that may, for example, be included in the communication interface modules and/or utilized thereby.

The exemplary device (or system) 800 may also comprise any of a variety of signal processing module(s) 865. Such signal processing module(s) 865 may, for example, be utilized to assist in processing various types of information discussed previously (*e.g*., with regard to sensor processing, position or location determination, orientation determination, video processing, image processing, audio processing, general user interface information data processing, etc.). For example and without limitation, the signal processing module(s) 890 may comprise: video/graphics processing modules (*e.g*. MPEG-2, MPEG-4, H.263, H.264, JPEG, TIFF, 3-D, 2-D, MDDI, etc.); audio processing modules (*e.g*., MP3, AAC, MIDI, QCELP, AMR, CMX, etc.); and/or tactile processing modules (*e.g*., Keypad I/O, touch screen processing, motor control, etc.).

The previous discussion generally concerned a system and method for maintaining a network of user-selectable device (*e.g*., for remote monitoring and/or control).

In summary, various aspects of the present invention provide a system and method for managing a network of user-selectable devices. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method for managing a network (405, 505, 506, 605, 606) of user-selectable devices (700, 800), the method comprising:
receiving device identification information identifying a user-selectable device (700, 800) from a user;
receiving device location information specifying a location of the user-selectable device (700, 800) from a user; and
maintaining a database (361, 461, 561, 661) describing the network (405, 505, 506, 605, 606) of user-selectable devices (700, 800), the database (361, 461, 561, 661) comprising the received device identification information and the received device location information; **characterized by**
presenting an image (320) of the user-selectable device (700, 800), analyzing image details of said image (320) of the user-selectable device (700, 800) to determine a visual characterization of the user-selectable device (700, 800) to be used for comparing with a later image (320) to determine the existence of the characterized user-selectable device (700, 800).

2. The method of claim 1, wherein said device identification information comprises information indicating a general type and/or a device model number of a user-selectable device (700, 800).

3. The method of claim 1, wherein said receiving device location information comprises:
presenting a map; and
receiving a user input identifying a location of the user-selectable device (700, 800) on the presented map.

4. The method of claim 1, wherein said receiving device location information comprises:
presenting an image (320); and
receiving a user input identifying a user-selectable device (700, 800) in the presented image (320).

5. The method of claim 5, wherein said presenting an image (320) comprises presenting a real-time image from a camera (436, 536, 636).

6. The method of claim 1, wherein said receiving device location information comprises receiving information from a user describing a multi-dimensional space associated with a user-selectable device (700, 800).

7. The method of claim 1, comprising receiving communication information describing how to communicate with the user-selectable device (700, 800).

8. The method of claim 8, wherein the communication information comprises communication network address information and/or communication protocol information for the user-selectable device (700, 800).

9. The method of claim 1, comprising receiving information describing user-interface functionality for the user-selectable device (700, 800).

10. The method of claim 1, wherein said maintaining a database (361, 461, 561, 661) comprises maintaining a data structure in which information of a user-selectable device (700, 800) is retrievable by device location.

11. The method of claim 1, wherein said maintaining a database (361, 461, 561, 661) comprises maintaining a data structure in which information of a user-selectable device (700, 800) is indexed by location on a map.

12. The method of claim 1, wherein said maintaining a database (361, 461, 561, 661) comprises maintaining a data structure in which information of a user-selectable device (700, 800) is indexed by location in an image (320).

13. A system for managing a network (405, 505, 506, 605, 606) of user-selectable devices (700, 800), the system comprising at least one module operable to, at least:
receive device identification information identifying a user-selectable device (700, 800) from a user;
receive device location information specifying a location of the user-selectable device (700, 800) from a user; and
maintain a database (361, 461, 561, 661) describing the network (405, 505, 506, 605, 606) of user-selectable devices (700, 800), the database (361, 461, 561, 661) comprising the received device identification information and the received device location information; **characterized by**
presenting an image (320) of the user-selectable device (700, 800), analyzing image details of said image (320) of the user-selectable device (700, 800) to determine a visual characterization of the user-selectable device (700, 800) to be used for comparing with a later image (320) to determine the existence of the characterized user-selectable device (700, 800).

14. The system of claim 13, wherein said at least one module is operable to said receive device location information by, at least in part, operating to:
present a map; and
receive a user input identifying a location of the user-selectable device (700, 800) on the presented map.

15. The system of any of claims 13 to 14, wherein said at least one module is operable to said receive device location information by, at least in part, operating to:
present an image (320); and
receive a user input identifying a user-selectable device (700, 800) in the presented image (320).

## Patentansprüche

1. Verfahren zum Verwalten eines Netzwerks (405, 505, 506, 605, 606) von durch den Benutzer auswählbaren Vorrichtungen (700, 800), wobei das Verfahren umfasst:
Empfangen von Vorrichtungsidentifizierungsinformationen, die eine durch den Benutzer auswählbare Vorrichtung (700, 800) identifizieren, von einem Benutzer;
Empfangen von Vorrichtungsstandortinformationen, die den Standort der durch den Benutzer auswählbaren Vorrichtung (700, 800) spezifizieren, von einem Benutzer; und
Unterhalten einer Datenbank (361, 461, 561, 661), die das Netzwerk (405, 505, 506, 605, 606) von durch den Benutzer auswählbaren Vorrichtungen (700, 800) beschreibt, wobei die Datenbank (316, 461, 561, 661) die empfangenen Vorrichtungsidentifizierungsinformationen und die empfangenen Vorrichtungsstandortinformationen enthält;
**gekennzeichnet durch**
Präsentieren eines Bilds (320) der **durch** den Benutzer auswählbaren Vorrichtung (700, 800), Analysieren von Bilddetails des Bilds (320) der **durch** den Benutzer auswählbaren Vorrichtung (700, 800), um eine visuelle Kennzeichnung der **durch** den Benutzer auswählbaren Vorrichtung (700, 800) zu bestimmen, die zum Vergleich mit einem späteren Bild (320) zu verwenden ist, um das Vorhandensein der gekennzeichneten **durch** den Benutzer auswählbaren Vorrichtung (700, 800) zu ermitteln.

2. Verfahren nach Anspruch 1, wobei die Vorrichtungsidentifizierungsinformationen Informationen aufweisen, die einen allgemeinen Typ und/oder eine Vorrichtungsmodellnummer einer durch den Benutzer auswählbaren Vorrichtung (700, 800) angeben.

3. Verfahren nach Anspruch 1, wobei das Empfangen von Vorrichtungsstandortinformationen umfasst:
Präsentieren einer Karte; und
Empfangen einer Benutzereingabe, die einen Standort der durch den Benutzer auswählbaren Vorrichtung (700, 800) auf der vorgelegten Karte identifiziert.

4. Verfahren nach Anspruch 1, wobei das Empfangen von Vorrichtungsstandortinformationen umfasst:
Präsentieren eines Bilds (320); und
Empfangen einer Benutzereingabe, die eine durch den Benutzer auswählbare Vorrichtung (700, 800) in dem vorgelegten Bild (320) identifiziert.

5. Verfahren nach Anspruch 5, wobei das Präsentieren eines Bilds (320) das Präsentieren eines Echtzeitbilds von einer Kamera (436, 536, 636) umfasst.

6. Verfahren nach Anspruch 1, wobei das Empfangen von Vorrichtungsstandortinformationen das Empfangen von Informationen von einem Benutzer umfasst, die einen mehrdimensionalen Raum beschreiben, der zu einer durch den Benutzer auswählbaren Vorrichtung (700, 800) gehört.

7. Verfahren nach Anspruch 1, das das Empfangen von Kommunikationsinformationen umfasst, die beschreiben, wie mit der durch den Benutzer auswählbaren Vorrichtung (700, 800) zu kommunizieren ist.

8. Verfahren nach Anspruch 8, wobei die Kommunikationsinformationen Kommunikationsnetzwerk-Adressinformationen und/oder Kommunikationsprotokollinformationen für die durch den Benutzer auswählbare Vorrichtung (700, 800) aufweisen.

9. Verfahren nach Anspruch 1, das das Empfangen von Informationen umfasst, die Benutzerschnittstellenfunktionalität für die durch den Benutzer auswählbare Vorrichtung (700, 800) beschreiben.

10. Verfahren nach Anspruch 1, wobei das Unterhalten einer Datenbank (361, 461, 561, 661) das Unterhalten einer Datenstruktur umfasst, in der Informationen einer durch den Benutzer auswählbaren Vorrichtung (700, 800) mittels Vorrichtungsstandort abrufbar sind.

11. Verfahren nach Anspruch 1, wobei das Unterhalten einer Datenbank (361, 461, 561, 661) das Unterhalten einer Datenstruktur umfasst, in der Informationen einer durch den Benutzer auswählbaren Vorrichtung (700, 800) mittels Standort in einer Karte indexiert werden.

12. Verfahren nach Anspruch 1, wobei das Unterhalten einer Datenbank (361, 461, 561, 661) das Unterhalten einer Datenstruktur umfasst, in der Informationen einer durch den Benutzer auswählbaren Vorrichtung (700, 800) mittels Standort in einem Bild (320) indexiert werden.

13. System zum Verwalten eines Netzwerks (405, 505, 506, 605, 606) von durch den Benutzer auswählbaren Vorrichtungen (700, 800), wobei das System wenigstens ein Modul aufweist, das betreibbar ist wenigstens zum:
Empfangen von Vorrichtungsidentifizierungsinformationen, die eine durch den Benutzer auswählbare Vorrichtung (700, 800) identifizieren, von einem Benutzer;
Empfangen von Vorrichtungsstandortinformationen, die den Standort der durch den Benutzer auswählbaren Vorrichtung (700, 800) spezifizieren, von einem Benutzer; und
Unterhalten einer Datenbank (361, 461, 561, 661), die das Netzwerk (405, 505, 506, 605, 606) von durch den Benutzer auswählbaren Vorrichtungen (700, 800) beschreibt, wobei die Datenbank (316, 461, 561, 661) die empfangenen Vorrichtungsidentifizierungsinformationen und die empfangenen Vorrichtungsstandortinformationen enthält;
**gekennzeichnet durch**
Präsentieren eines Bilds (320) der **durch** den Benutzer auswählbaren Vorrichtung (700, 800), Analysieren von Bilddetails des Bilds (320) der **durch** den Benutzer auswählbaren Vorrichtung (700, 800), um eine visuelle Kennzeichnung der **durch** den Benutzer auswählbaren Vorrichtung (700, 800) zu bestimmen, die zum Vergleich mit einem späteren Bild (320) zu verwenden ist, um das Vorhandensein der gekennzeichneten **durch** den Benutzer auswählbaren Vorrichtung (700, 800) zu ermitteln.

14. System nach Anspruch 13, wobei das wenigstens eine Modul dazu betreibbar ist, die Vorrichtungsstandortinformationen dadurch zu empfangen, dass es wenigstens teilweise arbeitet zum:
Präsentieren einer Karte; und
Empfangen einer Benutzereingabe, die einen Standort der durch den Benutzer auswählbaren Vorrichtung (700, 800) auf der vorgelegten Karte identifiziert.

15. System nach einem der Ansprüche 13 bis 14, wobei das wenigstens eine Modul dazu betreibbar ist, die Vorrichtungsstandortinformationen dadurch zu empfangen, dass es wenigstens teilweise arbeitet zum:
Präsentieren eines Bilds (320); und
Empfangen einer Benutzereingabe, die eine durch den Benutzer auswählbare Vorrichtung (700, 800) in dem vorgelegten Bild (320) identifiziert.

## Revendications

1. Procédé de gestion d'un réseau (405, 505, 506, 605, 606) de dispositifs (700, 800) sélectionnables par un utilisateur, le procédé comprenant :
la réception d'une information d'identification de dispositif identifiant un dispositif (700, 800) sélectionnable par un utilisateur d'un utilisateur ;
la réception d'une information de localisation de dispositif spécifiant une localisation du dispositif (700, 800) sélectionnable par un utilisateur d'un utilisateur; et
le maintien d'une base de données (361, 461, 561, 661) décrivant le réseau (405, 505, 506, 605, 606) de dispositifs (700, 800) sélectionnables par un utilisateur, la base de données (361, 461, 561, 661) comprenant l'information d'identification de dispositif reçue et l'information de localisation de dispositif reçue ; **caractérisé par**
la présentation d'une image (320) du dispositif (700, 800) sélectionnable par un utilisateur, l'analyse de détails d'image de ladite image (320) du dispositif (700, 800) sélectionnable par un utilisateur pour déterminer une caractérisation visuelle du dispositif (700, 800) sélectionnable par un utilisateur destinée à être utilisée pour comparer avec une image (320) ultérieure pour déterminer l'existence du dispositif (700, 800) sélectionnable par un utilisateur caractérisé.

2. Procédé selon la revendication 1, dans lequel ladite information d'identification de dispositif comprend une information indiquant un type général et/ou un numéro de modèle de dispositif d'un dispositif (700, 800) sélectionnable par un utilisateur.

3. Procédé selon la revendication 1, dans lequel ladite réception d'une information de localisation de dispositif comprend :
la présentation d'une carte ; et
la réception d'une entrée d'utilisateur identifiant une localisation du dispositif (700, 800) sélectionnable par un utilisateur sur la carte présentée.

4. Procédé selon la revendication 1, dans lequel ladite réception d'une information de localisation de dispositif comprend :
la présentation d'une image (320) ; et
la réception d'une entrée d'utilisateur identifiant un dispositif (700, 800) sélectionnable par un utilisateur dans l'image (320) présentée.

5. Procédé selon la revendication 4, dans lequel ladite présentation d'une image (320) comprend la présentation d'une image en temps réel provenant d'une caméra (436, 536, 636).

6. Procédé selon la revendication 1, dans lequel ladite réception d'une information de localisation de dispositif comprend la réception d'une information provenant d'un utilisateur décrivant un espace multidimensionnel associé avec un dispositif (700, 800) sélectionnable par un utilisateur.

7. Procédé selon la revendication 1, comprenant la réception d'une information de communication décrivant comment communiquer avec le dispositif (700, 800) sélectionnable par un utilisateur.

8. Procédé selon la revendication 7, dans lequel l'information de communication comprend une information d'adresse de réseau de communication et/ou une information de protocole de communication pour le dispositif (700, 800) sélectionnable par un utilisateur.

9. Procédé selon la revendication 1, comprenant la réception d'une information décrivant une fonctionnalité d'interface utilisateur pour le dispositif (700, 800) sélectionnable par un utilisateur.

10. Procédé selon la revendication 1, dans lequel ledit maintien d'une base de données (361, 461, 561, 661) comprend le maintien d'une structure de données dans laquelle une information d'un dispositif (700, 800) sélectionnable par un utilisateur est récupérable par localisation de dispositif.

11. Procédé selon la revendication 1, dans lequel ledit maintien d'une base de données (361, 461, 561, 661) comprend le maintien d'une structure de données dans laquelle une information d'un dispositif (700, 800) sélectionnable par un utilisateur est indexée par localisation sur une carte.

12. Procédé selon la revendication 1, dans lequel ledit maintien d'une base de données (361, 461, 561, 661) comprend le maintien d'une structure de données dans laquelle une information d'un dispositif (700, 800) sélectionnable par un utilisateur est indexée par localisation dans une image (320).

13. Système de gestion d'un réseau (405, 505, 506, 605, 606) de dispositifs (700, 800) sélectionnables par un utilisateur, le système comprenant au moins un module utilisable pour, au moins :
recevoir une information d'identification de dispositif identifiant un dispositif (700, 800) sélectionnable par un utilisateur d'un utilisateur ;
recevoir une information de localisation de dispositif spécifiant une localisation du dispositif (700, 800) sélectionnable par un utilisateur d'un utilisateur ; et
maintenir une base de données (361, 461, 561, 661) décrivant le réseau (405, 505, 506, 605, 606) de dispositifs (700, 800) sélectionnables par un utilisateur, la base de données (361, 461, 561, 661) comprenant l'information d'identification de dispositif reçue et l'information de localisation de dispositif reçue ; **caractérisé par**
la présentation d'une image (320) du dispositif (700, 800) sélectionnable par un utilisateur, l'analyse de détails d'image de ladite image (320) du dispositif (700, 800) sélectionnable par un utilisateur pour déterminer une caractérisation visuelle du dispositif (700, 800) sélectionnable par un utilisateur destinée à être utilisée pour comparer avec une image (320) ultérieure pour déterminer l'existence du dispositif (700, 800) sélectionnable par un utilisateur caractérisé.

14. Système selon la revendication 13, dans lequel ledit au moins un module est utilisable pour ladite réception d'une information de localisation de dispositif en fonctionnant, au moins en partie, pour :
présenter une carte ; et
recevoir une entrée d'utilisateur identifiant une localisation du dispositif (700, 800) sélectionnable par un utilisateur sur la carte présentée.

15. Système selon la revendication 13 ou 14, dans lequel ledit au moins un module est utilisable pour ladite réception d'une information de localisation de dispositif en fonctionnant, au moins en partie, pour :
présenter une image (320) ; et
recevoir une entrée d'utilisateur identifiant un dispositif (700, 800) sélectionnable par un utilisateur dans l'image (320) présentée.
